# EUROPÄISCHE PATENTSCHRIFT

(11) **EP 2 653 328 B1**
(45) Veröffentlichungstag und Bekanntmachung des Hinweises auf die Patenterteilung: **08.10.2014**
(21) Anmeldenummer: 13162265.6
(22) Anmeldetag: 04.04.2013
(51) Int. Cl.: B60H 1/00

(54) **Klimatisierungssystem für ein Kraftfahrzeug und Verfahren zu dessen Steuerung**
Air-conditioning system for a motor vehicle and method of controlling the same
Système de climatisation pour un véhicule automobile et son procédé de commande

(30) Priorität: 21.04.2012 DE 102012008208
(43) Veröffentlichungstag der Anmeldung: 23.10.2013
(73) Patentinhaber: Volkswagen Aktiengesellschaft, 38440 Wolfsburg (DE)
(72) Erfinder: Driller, Sönke, 38518 Gifhorn (DE)

(56) Entgegenhaltungen:
- EP-A1- 0 795 807
- DE-A1- 10 046 851
- DE-A1-102009 023 138
- US-B1- 6 301 909

## Beschreibung

Die Erfindung bezieht sich auf ein Verfahren zur Steuerung eines Klimatisierungssystems, insbesondere eines manuell betätigbaren Klimasystems für ein Kraftfahrzeug, wobei das Klimatisierungssystem
- ein Primärklimagerät zur Klimatisierung einer Primärklimazone im Inneren des Kraftfahrzeugs,
- ein Sekundärklimagerät zur Klimatisierung einer Sekundärklimazone im Inneren des Kraftfahrzeugs und
- ein Bedienteil mit Parameter-Einstellelementen zur Einstellung gewünschter Werte von Geräteparametern des Primärklimagerätes und mit Parameter-Anzeigeelementen zur Anzeige der eingestellten Werte,
aufweist,
wobei in einem Synchronmodus, in dem das Bedienteil die Kontrolle über beide Klimageräte hat, jede Werteinstellung für einen Geräteparameter des Primärklimagerätes auch dem entsprechenden Geräteparameter des Sekundärklimagerätes zugewiesen wird und wobei das Klimatisierungssystem auf einen Separatmodus umschaltbar ist, in dem das Bedienteil die Kontrolle über nur ein Klimagerät hat.

Die Erfindung bezieht sich weiter auf ein Klimatisierungssystem für ein Kraftfahrzeug, umfassend
- ein Primärklimagerät zur Klimatisierung einer Primärklimazone im Inneren des Kraftfahrzeugs,
- ein Sekundärklimagerät zur Klimatisierung einer Sekundärklimazone im Inneren des Kraftfahrzeugs,
- ein Bedienteil mit Parameter-Einstellelementen zur Einstellung gewünschter Werte von Geräteparametern des Primärklimagerätes und mit Parameter-Anzeigeelementen zur Anzeige der eingestellten Werte und
- ein mittels eines Bussystems mit den Klimageräten und dem Bedienteil datenaustauschend verbundenes und diese steuerndes Steuergerät,
wobei in einem Synchronmodus, in dem das Bedienteil die Kontrolle über beide Klimageräte hat, durch Betätigung eines Parameterwerte-Einstellelementes die entsprechenden Geräteparameter des Primärklimagerätes und des Sekundärklimagerätes zugleich und gleich einstellbar sind
und wobei das Klimatisierungssystem auf einen Separatmodus umschaltbar ist, in dem das Bedienteil die Kontrolle über nur ein Klimagerät hat.

Der Begriff der "gleichen" Einstellung beider Klimageräte ist hier im Sinne eines gleichen Klimakomfortniveaus in den von den beiden Klimageräten klimatisierten Fahrgastraumbereichen des Kraftfahrzeugs zu verstehen. Beispielsweise bei deutlich unterschiedlich großen Bereichen können sich bei "gleicher" Einstellung in diesem Sinne konkrete Parameterwerte, wie Ausblastemperatur und/oder Luftstromgeschwindigkeit und -menge durchaus unterscheiden.

Derartige Klimatisierungssysteme und Steuerungsverfahren dafür sind bekannt aus der DE 100 46 851 B4. Diese Druckschrift offenbart ein System mit einem Primärklimagerät zur Klimatisierung des Frontbereichs, insbesondere des Fahrerraums der Fahrgastzelle eines Kraftfahrzeugs und ein Sekundärklimagerät zur Klimatisierung des Heckbereichs der Fahrgastzelle. Jedem der beiden Klimageräte ist ein eigenes Bedienteil zugeordnet, das sich in dem von dem jeweiligen Gerät klimatisierten Bereich der Fahrgastzelle befindet. In einem Separatmodus ist jedes Klimagerät mittels des ihm zugeordneten Bedienteils ansteuerbar, d.h. das vordere Klimagerät mittels des vorderen Bedienteils und das hintere Klimagerät mittels des hinteren Bedienteils. Insbesondere sind konkrete Werte von Geräteparametern, wie beispielsweise Luftstrommenge, Luftstromgeschwindigkeit, Luftstromtemperatur, Luftstromverteilung etc. durch Betätigung von Knöpfen und Reglern am Bedienteil wählbar. In einem Synchronmodus, der sich mittels eines entsprechenden Modenschalters am vorderen Bedienteil aktivieren lässt, werden beide Klimageräte über das vordere Bedienteil angesteuert. Das hintere Bedienteil wird dabei "mitgeschleppt", d.h. seinen Geräteparametern werden diejenigen konkreten Werte zugewiesen, die für das vordere Klimagerät am vorderen Bedienteil eingestellt werden. Das hintere Bedienteil ist in diesem Modus funktionslos. Neben dem technischen Aufwand und den Kosten, die das Vorsehen zweier separater Bedienteile verursacht, ergeben sich Probleme bei der Rückumschaltung vom Synchronmodus auf den Separatmodus. Hierbei werden nämlich dem hinteren Klimagerät unvermittelt die am hinteren Bedienteil eingestellten Parameterwerte zugewiesen. Weichen diese stark von den am vorderen Bedienteil eingestellten Parameterwerten ab, kommt es zu einem erheblichen Wertesprung, der sich beispielsweise in einer plötzlichen, erheblichen Beschleunigung eines Gebläses ausdrücken kann. Der damit verbundene, überraschende Geräuschanstieg wird als unkomfortabel empfunden. Das Risiko für eine solche unangenehme Überraschung besteht insbesondere dann, wenn zuvor der Synchronmodus eingeschaltet worden war, weil im hinteren Fahrgastzellenbereich inkompetente Fahrgäste, wie Kinder transportiert wurden, die dazu neigen, an den Parametereinstellelementen des hinteren Bedienteils zu spielen.

Aus der JP 10119542 A ist ein ähnliches System bekannt, bei dem ebenfalls das hintere Bedienteil abgeschaltet und die Kontrolle über das hintere Klimagerät dem vorderen Bedienteil übergeben wird.
Aus der US 6,301,909 B1 ist ein weiteres System bekannt, welches grundsätzlich im Synchronmodus arbeitet, sich aber selbständig auf einen Separatmodus umschaltet, wenn Kommunikationsfehler zwischen dem vorderen Bedienteil und dem hinteren Klimagerät festgestellt werden.

Es ist die Aufgabe der vorliegenden Erfindung, ein gattungsgemäßes Klimatisierungssystem und ein Steuerverfahren derart weiterzubilden, dass ohne Funktionalitätseinbußen sanfte Übergänge beim Kontrollwechsel realisiert werden.

Diese Aufgabe wird in Verbindung mit den Merkmalen des Oberbegriffs von Anspruch 1 dadurch gelöst, dass innerhalb des Separatmodus dem Bedienteil wahlweise die Kontrolle über das Primärklimagerät oder das Sekundärklimagerät zuweisbar ist und
dass bei einem Wechsel der Kontrolle die Geräteparameterwerte des vor dem Kontrollwechsel kontrollierten Klimagerätes unverändert bleiben und die Geräteparameterwerte des nach dem Kontrollwechsel kontrollierten Klimagerätes den aktuellen Stellungen der Parameter-Einstellelemente zugeordnet und von den Parameter-Anzeigeelementen angezeigt werden.

Die Aufgabe wird auch in Verbindung mit den Merkmalen von Anspruch 6 dadurch gelöst, dass das Bedienteil einen Geräteschalter aufweist, mittel dessen innerhalb des Separatmodus dem Bedienteil wahlweise die Kontrolle über das Primärklimagerät oder das Sekundärklimagerät zuweisbar ist und dass das Steuergerät eingerichtet ist, bei einem Wechsel der Kontrolle die Geräteparameterwerte des vor dem Kontrollwechsel kontrollierten Klimagerätes unverändert zu lassen und die Geräteparameterwerte des nach dem Kontrollwechsel kontrollierten Klimagerätes den aktuellen Stellungen der Parameter-Einstellelemente zuzuordnen und von den Parameter-Anzeigeelementen anzeigen zu lassen.

Bevorzugte Ausführungsformen der Erfindung sind Gegenstand der abhängigen Ansprüche.

Vorliegend wird allgemein von einem Primärklimagerät und einem Sekundärklimagerät gesprochen. Diese können, müssen jedoch nicht wie beim Stand der Technik auf den vorderen und hinteren Bereich der Fahrgastzelle verteilt sein. Denkbar ist auch eine Aufteilung zwischen Fahrer- und Beifahrerseite oder sonstige Konstellationen.

Soweit möglich, sollen nachfolgend die Wirkungen und Vorteile des erfindungsgemäßen Verfahrens und des erfindungsgemäßen Systems gemeinsam diskutiert werden. Soweit nicht ausdrücklich Bezug auf das System oder das Verfahren genommen wird, gelten die nachfolgenden Aussagen *mutatis mutandum* sowohl für das Verfahren als auch für das System.

Die vorliegende Erfindung umfasst zwei Aspekte. Gemäß einem ersten Aspekt erfolgt die Steuerung beider Klimageräte nicht nur im Synchronmodus sondern auch im Separatmodus über ein gemeinsames Bedienteil, welches das einzige Bedienteil des gesamten Systems sein kann, wobei dies jedoch kein zwingendes Erfordernis ist. Allerdings erlaubt es dieser Erfindungsaspekt, auf eines der aus dem Stand der Technik bekannten Bedienteile, insbesondere auf das klassischerweise dem Sekundärklimagerät zugeordneten Bedienteil, zu verzichten. Dies hat offensichtliche Vorteile im Hinblick auf Kosten, Bauraumbedarf und Komplexität des Gesamtsystems. Zur Umschaltung ist am Bedienteil ein Geräteschalter vorgesehen, mittels dessen innerhalb des Separatmodus zwischen den Klimageräten umgeschaltet werden kann. Einstellungsänderungen, die am Bedienteil, insbesondere an dessen Einstellelementen vorgenommen werden, wirken sich auf das jeweils zugeschaltete Klimagerät aus. Während das jeweils nicht zugeschaltete Klimagerät hiervon unbeeinflusst bleibt.

Gemäß einem zweiten Aspekt der Erfindung werden bei einem Kontrollwechsel, d.h. bei einer Umschaltung der Klimageräte beispielsweise mittels des Geräteschalters nicht etwa, wie beim Stand der Technik, dem jeweils neu zugeschalteten Klimagerät die am Bedienteil eingestellten Parameterwerte zugewiesen. Vielmehr werden die am neu zugeschalteten Klimagerät aktuell anliegenden Parameterwerte den aktuell am Bedienteil anliegenden Stellungen der Parameter-Einstellelemente zugewiesen. Durch die reine Geräteumschaltung ergeben sich somit keine Änderungen der an den Klimageräten eingestellten Parameterwerte. Lediglich Stellungsänderungen der Parameter-Einstellelemente des Bedienteils führen zu Werteänderungen der entsprechenden Geräteparameter des jeweils kontrollierten, d.h. zugeschalteten Klimagerätes. Um dem Benutzer einen Hinweis auf die am aktuell kontrollierten Klimagerät eingestellten Parameterwerte zu geben, werden diese Werte an den entsprechenden Parameter-Anzeigeelementen des Bedienteils angezeigt. In dem beim Stand der Technik problematischen Fall eines Kontrollwechsels bei stark differierenden Einstellungen beider Klimageräte kommt es erfindungsgemäß somit nicht zu einem Wertesprung bei einem Klimagerät; vielmehr springt beim Kontrollwechsel lediglich die Anzeige am Bedienteil, was vom Benutzer nicht als störend wahrgenommen wird.
Bevorzugt ist wenigstens eines, günstigerweise jedes der Parameter-Einstellelemente als anschlagfreier Drehknopf ausgebildet, dessen Verdrehwinkel repräsentativ für das Ausmaß einer anzusteuernden Änderung des Wertes eines zugeordneten Geräteparameters ist. Durch die Anschlagsfreiheit ist zunächst jede Stellung des Drehknopfes gleichberechtigt. Die Absolutstellung des Drehknopfes ist somit für den zugeordneten Parameterwert nicht ausschlaggebend. Relevant für die Einstellung des Parameterwertes ist lediglich die Stellungsänderung des Drehknopfes.

Bei einer Weiterbildung dieser Ausführungsform ist vorgesehen, dass dem Parameter-Einstellelement als korrespondierendes Parameter-Anzeigeelement eine Leuchtelemente-Skala zugeordnet ist, auf der der jeweils aktuell eingestellte Geräteparameterwert als Relativwert innerhalb seines möglichen Wertebereichs durch Markierung einer entsprechenden Relativposition auf der Leuchtelemente-Skala dargestellt wird. Mit anderen Worten weist das Parameter-Anzeigeelement im Gegensatz zum zugeordneten Parameter-Einstellelement sehr wohl "Anschläge" auf, die den minimal und den maximal einstellbaren Parameterwert markieren. Zwischen diesen beiden Grenzen lässt sich der tatsächlich eingestellte Parameterwert als Relativposition komfortabel darstellten. Diese intuitive Anzeige hat sich als besonders bedienerfreundlich erwiesen. Aus ästhetischen Gründen sowie aus Gründen der Bauraumminimierung kann dabei vorgesehen sein, dass die Leuchtelemente-Skala als ein zu dem zugeordneten Drehknopf konzentrischer Teilring ausgebildet ist. Der Teilring, der im Extremfall in einen Vollring übergehen kann, kann innerhalb oder außerhalb der äußeren Begrenzung des Drehknopfes angeordnet sein, sollte jedoch jedenfalls nicht mit diesem mitrotieren.

Bei einer vorteilhaften Weiterbildung der Erfindung ist vorgesehen, dass bei Betätigung eines in jedem Betriebsmodus zur Einleitung der Umschaltung in den jeweils anderen Betriebsmodus dienenden Modenschalters im Synchronmodus dem Bedienteil die Kontrolle über das Primärklimagerät zugewiesen wird. Bei dieser Weiterbildung ist somit am Bedienteil ein Modenschalter vorgesehen, mit dem zwischen dem Synchronmodus und dem Separatmodus umgeschaltet werden kann. Wird dieser Modenschalter betätigt, während das System im Synchronmodus arbeitet, erfolgt die Umstellung auf den Separatmodus; gleichzeitig wird die Kontrolle des Bedienteils über das Sekundärklimagerät aufgegeben, während die Kontrolle über das Primärklimagerät beibehalten wird. Hintergrund dieser Wahl ist, dass es nach Erkenntnis der Erfinder häufiger vorkommt, dass der Fahrer als hauptsächlicher Benutzer des Bedienteils vor allem dann in den Separatmodus wechseln möchte, wenn er die Einstellungen des für ihn relevanten Primärklimagerätes ändern und damit die vom Sekundärklimagerät betroffenen Fahrgäste nicht behelligen möchte. Dieses Szenario ist häufiger als das Szenario, bei dem der Fahrer, etwa auf Anforderung von Fahrgästen, isoliert die Einstellungen des Sekundärklimagerätes ändern möchte. Diese spezielle Auslegung führt daher zu einer Minimierung der erforderlichen Schaltvorgänge und somit zu einem Komfortzuwachs.

Bevorzugt ist weiter vorgesehen, dass bei Betätigung eines im Separatmodus zur Einleitung des Kontrollwechsels dienenden Geräteschalters im Synchronmodus eine Modenumschaltung auf den Separatmodus erfolgt, wobei dem Bedienteil die Kontrolle über das Sekundärklimagerät zugewiesen wird. Bevorzugt weist das Bedienteil einen (zusätzlichen) Schalter zur Geräteumschaltung innerhalb des Separatmodus auf. Im Synchronmodus, in dem beide Klimageräte zugleich angesteuert werden, ist ein solcher Geräteschalter zunächst funktionslos. Ihm wird jedoch im Rahmen der hier beschriebenen Weiterbildung eine besondere Funktion zugwiesen, die eine "Abkürzung" der Verfahrensschritte des Betätigen des Modenschalters zwecks Umschaltung in den Separatmodus und Betätigung des Geräteschalters zwecks Umschaltung vom Primär- auf das Sekundärklimagerät entspricht. Dies entspricht der Linie einer möglichst intuitiven Bedienbarkeit des Systems, die keine Verinnerlichung einer konsequent durchgehaltenen Schaltlogik durch den Benutzer verlangt.

Die hier beschriebenen Verfahrenselemente werden im erfindungsgemäßen System durch ein entsprechend eingerichtetes Steuergerät durchgeführt, welches mit dem Bedienteil und den Klimageräten über ein Bussystem, beispielsweise einen LIN-Bus verbunden ist und die Verfahrensregeln in Software gespeichert hat. Das Steuergerät kann als separates Bauteil ausgebildet sein oder z.B. in das Bedienteil integriert sein.

Weitere Merkmale und Vorteile der Erfindung ergeben sich aus der nachfolgenden, speziellen Beschreibung und den Zeichnungen.

Es zeigen:
- Figur 1: eine schematische Darstellung des erfindungsgemäßen Klimatisierungssystems,
- Figur 2: eine schematische Darstellung einer möglichen Ausführungsform eines Bedienteils des Klimatisierungssystems von Figur 1.

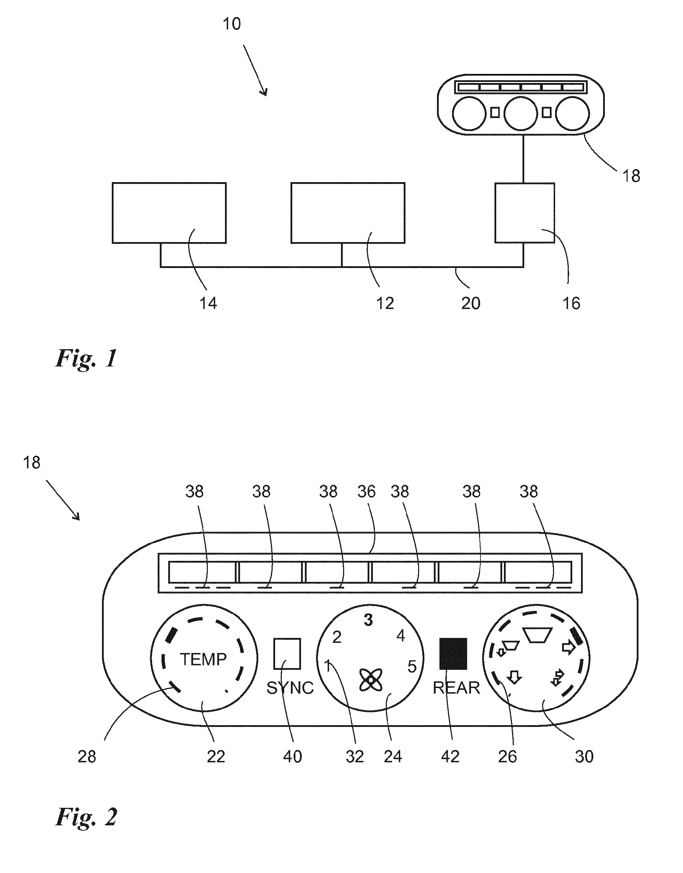

Figur 1 zeigt eine schematische Darstellung eines erfindungsgemäßen Klimatisierungssystems 10. Das Klimatisierungssystem 10 weist ein Primärklimagerät 12 auf, welches beispielsweise den vorderen Bereich einer Fahrgastzelle eines Kraftfahrzeugs klimatisiert, d.h. klimatechnisch mit diesem verbunden ist. Das Primärklimagerät 12 weist zumindest einen Wärmetauscher zur Temperierung der Luft auf, vorzugsweise einen motorkühlmitteldurchströmten oder elektrisch betriebenen Heizkörper und einen Verdampfer eines Kältemittelkreislaufs oder einen elektrisch betriebenen Kühlwärmetauscher. Das Klimatisierungssystem 10 weist weiter ein Sekundärklimagerät 14 auf, welches beispielsweise mit dem hinteren Bereich der Fahrgastzelle klimatechnisch verbunden ist. Die Ausstattung mit Wärmetauschern ist bevorzugt wie beim Primärklimagerät 12 gestaltet, wobei gegebenenfalls die Leistung und/oder Zahl der Wärmetauscher geringer sein kann. Weiter umfasst das Klimatisierungssystem 10 ein Steuergerät 16, welches in datenaustauschender Verbindung mit den Klimageräten 12, 14 steht und in dem insbesondere Ansteuerregeln in Software hinterlegt sind. Das Steuergerät 16 ist auch mit einem Bedienteil 18 verbunden, dessen Einzelheiten weiter unten im Zusammenhang mit Figur 2 erläutert werden sollen. Die datenaustauschende Verbindung zwischen den Klimageräten 12, 14, dem Steuergerät 16 und dem Bedienteil 18 ist mittels eines Daten-Buses 20 realisiert. Das Steuergerät 16 kann auch in das Bedienteil 18 integriert sein.

Figur 2 zeigt eine schematische Darstellung einer möglichen Ausführungsform des Bedienteils 18 mit einer Mehrzahl von Parameter-Einstellelementen, Parameteranzeigeelementen, einem Modenschalter "SYNC" und einem Geräteschalter "REAR". Bei der dargestellten Ausführungsform ist ein als anschlagfreier, ringförmiger Drehknopf ausgebildeter Temperaturschalter 22, ein ebenso ausgebildeter Gebläseschalter 24 und ein ebenso ausgestalteter Lüftungsrichtungsschalter 26 vorgesehen. Im Inneren des Temperaturschalters 22 ist eine teilringförmige LED-Anordnung 28 vorgesehen; im Inneren des Lüftungsrichtungsschalters 26 ist eine vergleichbare LED-Anordnung 30 vorgesehen. Ein jeweils eingestellter Temperatur- bzw. Lüftungsrichtungswert kann als Relativwert zu seinem möglichen Wertebereich oder durch räumliche Zuordnung zu einem entsprechenden Piktogramm durch Aufleuchten einer der LEDs der LED-Anordnungen 28, 30 dargestellt werden, wie dies in Figur 2 durch die Fettdarstellung einer der LEDs angedeutet ist. Der Gebläseschalter 24 weist eine numerische LED-Anordnung 32 auf, bei der ein eingestellter Wert durch Aufleuchten der entsprechenden Zahl dargestellt sein kann, wie dies in Figur 2 anhand der fett dargestellten "3" angedeutet ist. Weiter ist eine Tastenzeile 36 vorgesehen, bei der jede Taste mit einer oder mehreren LEDs 38 versehen ist, um den Parameterwert des von dem jeweils angesteuerten Geräteparameters zu symbolisieren.

Weiter weist das Bedienteil 18 einen Modenschalter 40 "SYNC" und einen Geräteschalter 42 "REAR" auf, die jeweils mit einer LED kombiniert sind, die die jeweilige Schalterstellung symbolisieren.

Bei der gezeigten Darstellung befindet sich das System im Separatmodus, wobei das Bedienteil 18 die Kontrolle über das Sekundärklimagerät 14 hat (Modenschalter 40 "SYNC" ist nicht aktiviert; Geräteschalter 42 "REAR" ist aktiviert). Bei Betätigung des Geräteschalters 42 würde dieser deaktiviert, seine LED würde erlöschen und das Bedienteil 18 würde die Kontrolle über das Primärklimagerät übernehmen. An dessen Einstellungen würde sich zunächst nichts ändern. Ändern würden sich jedoch die Anzeigen 28, 30, 32, 38 entsprechend den am Primärklimagerät eingestellten Parameterwerten. Erst eine Betätigung eines der Parameter-Einstellelemente 22, 24, 26, 36 würde zu einer Einstellungsänderung des Primärklimagerätes 12 führen. Erneute Betätigung des Geräteschalters 42 würde den oben beschriebenen Ausgangszustand zurückführen.

Betätigung des Modenschalters 40 "SYNC" würde zu einem Aufleuchten dessen LEDs führen, zu einem Erlöschen der LED des Geräteschalters 42 und zu einer Umschaltung des Systems in den Synchronmodus, wobei das Bedienteil 18 die Kontrolle über das Primärklimagerät 12 und gleichzeitig über das Sekundärklimagerät 14 übernähme. Die Parameter-Anzeigeelemente 28, 30, 32, 38 würden umspringen und die Geräteparameter des Primärklimagerätes anzeigen, die dann gleichzeitig auch dem "mitgeschleppten" Sekundärklimagerät 14 zugewiesen werden. Ausgehend von diesem neuen Grundzustand, würde eine neue Betätigung des Modenschalters 40 zu einer Rückumschaltung in den Separatmodus führen, wobei jedoch das Bedienteil 18 die Kontrolle über das Primärklimagerät 12 behielte und lediglich die Kontrolle über das Sekundärklimagerät 14 niederlegte. Weder an den Einstellungen eines der Klimageräte 12, 14 noch an den Anzeigen würde sich etwas ändern.

Betätigung des Geräteschalters 42 anstelle des Modenschalters 40 im vorbeschriebenen neuen Grundzustand würde wieder in den eingangs beschriebenen Zustand zurückführen, bei dem sich das System im Separatmodus befindet und das Bedienteil 18 die Kontrolle über das Sekundärsteuergerät 14 hat, dem jedoch die im neuen Grundzustand zugewiesenen Parameterwerte zugewiesen bleiben.

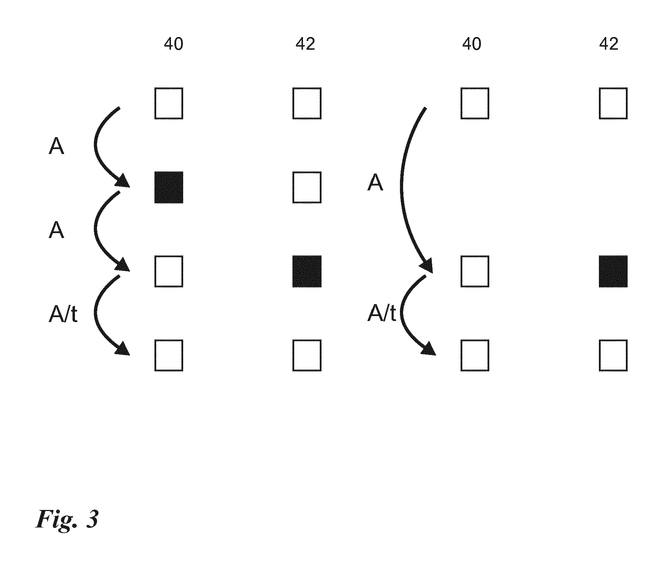

Figur 3 zeigt ein bevorzugtes Schaltungsschema der Erfindung. Das Schema geht aus von einem Initialzustand, in dem keiner der beiden Schalter betätigt ist und keine entsprechende Anzeige leuchtet. In diesem Zustand arbeitet das System im Separatmodus und dem Bedienteil ist die Kontrolle über das Primärklimagerät zugewiesen. Bezogen auf das oben beschriebene Beispiel können somit nur Einstellungen am vorderen Klimagerät vorgenommen werden. In diesem Zustand wird eine Aktion A durchgeführt, nämlich das Betätigen des Modenschalters 40 (linke Spalte des Schemas) oder das Betätigen des Geräteschalters 42 (rechte Spalte des Schemas).

Betätigen des Modenschalters 40 SYNC führt in den Synchronmodus, die SYNC-Anzeige leuchtet auf, die Einstellungen des Primärklimagerätes werden für das Sekundärklimagerät übernommen und beide Klimageräte sind gemeinsam weiter einstellbar.

Nachfolgende Betätigung des Geräteschalters 42 REAR führt zur Rückschaltung in den Separatmodus, wobei dem Bedienteil die Kontrolle über das Sekundärklimagerät zugewiesen wird. Bezogen auf das oben beschriebene Beispiel können somit nur Einstellungen am hinteren Klimagerät vorgenommen werden.

Erneutes Drücken des Geräteschalters 42 REAR führt zurück in den oben zuerst beschriebenen Ausgangszustand. Zu dem gleichen Ergebnis führt bei einer bevorzugten Ausführungsform auch reiner Zeitablauf t (absolut oder nach der letzten Einstellungsänderung). Beispielsweise kann vorgesehen sein, dass nach ca. 10 Sekunden eine automatische Rückstellung in den Ausgangszustand erfolgt.

Betätigen des Geräteschalters 42 REAR im oben zuerst beschrieben Ausgangszustand führt direkt in den zuletzt beschriebenen Zustand, d.h. in den Separatmodus, wobei dem Bedienteil die Kontrolle über das Sekundärklimagerät zugewiesen wird. Bezogen auf das oben beschriebene Beispiel können somit nur Einstellungen am hinteren Klimagerät vorgenommen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere kann die Anzahl, Auslegung und Gestaltung der Einstell- und Anzeigeelemente deutlich von der hier dargestellten Form abweichen. Denkbar sind auch Varianten, bei denen trotz des erfindungsgemäßen Einsparpotenzials ein zweites Bedienteil vorgesehen ist. Selbstverständlich ist die Erfindung auch auf mehr als zwei Klimageräte ausweitbar. Dabei ist allgemein vorgesehen, dass der Synchronmodus aufgegeben wird und eine entsprechende Anzeige erlischt, wenn ein einzelnes Klimagerät, insbesondere durch Drücken der REAR-Taste, angewählt wird, und umgekehrt. Beim Ausschalten des Kraftfahrzeugs werden günstigerweise die aktuellen Einstellungen gespeichert und bei einem Neustart reaktiviert.

### Bezugszeichenliste

- 10: Klimatisierungssystem
- 12: Primärklimagerät
- 14: Sekundärklimagerät
- 16: Steuergerät
- 18: Bedienteil
- 20: Daten-Bus
- 22: Temperaturregler
- 24: Gebläseregler
- 26: Strömungsrichtungsregler
- 28: LED-Anordnung
- 30: LED-Anordnung
- 32: numerische LED-Anordnung
- 36: Tastenleiste
- 38: LED-Anordnung
- 40: Modenschalter
- 42: Geräteschalter
- A: Aktion (Schalterbetätigung)
- t: Zeitablauf

## Patentansprüche

1. Verfahren zur Steuerung eines Klimatisierungssystems (10) für ein Kraftfahrzeug, wobei das Klimatisierungssystem (10)
- ein Primärklimagerät (12) zur Klimatisierung einer Primärklimazone im Inneren des Kraftfahrzeugs,
- ein Sekundärklimagerät (14) zur Klimatisierung einer Sekundärklimazone im Inneren des Kraftfahrzeugs und
- ein Bedienteil (18) mit Parameter-Einstellelementen (22-26, 36) zur Einstellung gewünschter Werte von Geräteparametern des Primärklimagerätes (12) und mit Parameter-Anzeigeelementen (28-32, 38) zur Anzeige der eingestellten Werte,
aufweist,
wobei in einem Synchronmodus, in dem das Bedienteil (18) die Kontrolle über beide Klimageräte (12, 14) hat, jede Werteinstellung für einen Geräteparameter des Primärklimagerätes (12) auch dem entsprechenden Geräteparameter des Sekundärklimagerätes (14) zugewiesen wird
und wobei das Klimatisierungssystem (10) auf einen Separatmodus umschaltbar ist, in dem das Bedienteil (18) die Kontrolle über nur ein Klimagerät (12; 14) hat,
**dadurch gekennzeichnet,**
**dass** innerhalb des Separatmodus dem Bedienteil (18) wahlweise die Kontrolle über das Primärklimagerät (12) oder das Sekundärklimagerät (14) zuweisbar ist und
**dass** bei einem Wechsel der Kontrolle die Geräteparameterwerte des vor dem Kontrollwechsel kontrollierten Klimagerätes (12; 14) unverändert bleiben und die Geräteparameterwerte des nach dem Kontrollwechsel kontrollierten Klimagerätes (14; 12) den aktuellen Stellungen der Parameter-Einstellelemente (22-26, 36) zugeordnet und von den Parameter-Anzeigeelementen (28-32, 38) angezeigt werden.

2. Verfahren nach Anspruch 1,
**dadurch gekennzeichnet,**
**dass** wenigstens eines der Parameter-Einstellelemente (22-26) als anschlagfreier Drehknopf ausgebildet ist, dessen Verdrehwinkel repräsentativ für das Ausmaß einer anzusteuernden Änderung des Wertes eines zugeordneten Geräteparameters ist.

3. Verfahren nach Anspruch 2,
**dadurch gekennzeichnet,**
**dass** dem Parameter-Einstellelement (22-26) als korrespondierendes Parameter-Anzeigeelement eine Leuchtelemente-Skala (28, 32) zugeordnet ist, auf der der jeweils aktuell eingestellte Geräteparameterwert als Relativwert innerhalb seines möglichen Wertebereichs durch Markierung einer entsprechenden Relativposition auf der Leuchtelemente-Skala (28-32) dargestellt wird.

4. Verfahren nach einem der vorangehenden Ansprüche,
**dadurch gekennzeichnet,**
**dass** bei Betätigung eines in jedem Betriebsmodus zur Einleitung der Umschaltung in den jeweils anderen Betriebsmodus dienenden Modenschalters (40) im Synchronmodus dem Bedienteil (18) die Kontrolle über das Primärklimagerät (12) zugewiesen wird.

5. Verfahren nach einem der vorangehenden Ansprüche,
**dadurch gekennzeichnet,**
**dass** bei Betätigung eines im Separatmodus zur Einleitung des Kontrollwechsels dienenden Geräteschalters (42) im Synchronmodus eine Modenumschaltung auf den Separatmodus erfolgt, wobei dem Bedienteil (18) die Kontrolle über das Sekundärklimagerät (14) zugewiesen wird.

6. Klimatisierungssystem für ein Kraftfahrzeug, umfassend
- ein Primärklimagerät (12) zur Klimatisierung einer Primärklimazone im Inneren des Kraftfahrzeugs,
- ein Sekundärklimagerät (14) zur Klimatisierung einer Sekundärklimazone im Inneren des Kraftfahrzeugs,
- ein Bedienteil (18) mit Parameter-Einstellelementen (22-26, 36) zur Einstellung gewünschter Werte von Geräteparametern des Primärklimagerätes (12) und mit Parameter-Anzeigeelementen (28-32, 38) zur Anzeige der eingestellten Werte und
- ein mittels eines Bussystems (20) mit den Klimageräten (12, 14) und dem Bedienteil (18) datenaustauschend verbundenes und diese steuerndes Steuergerät,
wobei in einem Synchronmodus, in dem das Bedienteil (16) die Kontrolle über beide Klimageräte (12, 14) hat, durch Betätigung eines Parameterwerte-Einstellelementes (22-26, 36) die entsprechenden Geräteparameter des Primärklimagerätes (12) und des Sekundärklimagerätes (14) zugleich und gleich einstellbar sind und wobei das Klimatisierungssystem (10) auf einen Separatmodus umschaltbar ist, in dem das Bedienteil (18) die Kontrolle über nur ein Klimagerät (12; 14) hat, **dadurch gekennzeichnet,**
**dass** das Bedienteil (18) einen Geräteschalter (42) aufweist, mittel dessen innerhalb des Separatmodus dem Bedienteil (18) wahlweise die Kontrolle über das Primärklimagerät (12) oder das Sekundärklimagerät (14) zuweisbar ist und
**dass** das Steuergerät (16) eingerichtet ist, bei einem Wechsel der Kontrolle die Geräteparameterwerte des vor dem Kontrollwechsel kontrollierten Klimagerätes (12; 14) unverändert zu lassen und die Geräteparameterwerte des nach dem Kontrollwechsel kontrollierten Klimagerätes (14; 12) den aktuellen Stellungen der Parameter-Einstellelemente (22-26, 36) zuzuordnen und von den Parameter-Anzeigeelementen anzeigen (28-32, 38) zu lassen.

7. Klimatisierungssystem nach Anspruch 6,
**dadurch gekennzeichnet,**
**dass** wenigstens eines der Parameter-Einstellelemente (22-26) als anschlagfreier Drehknopf ausgebildet ist, dessen Verdrehwinkel repräsentativ für das Ausmaß einer anzusteuernden Änderung des Wertes eines zugeordneten Geräteparameters ist.

8. Klimatisierungssystem nach Anspruch 7,
**dadurch gekennzeichnet,**
**dass** dem Parameter-Einstellelement (22-26) als korrespondierendes Parameter-Anzeigeelement eine Leuchtelemente-Skala (28-32) zugeordnet ist, auf der der jeweils aktuell eingestellte Geräteparameterwert als Relativwert innerhalb seines möglichen Wertebereichs durch Markierung einer entsprechenden Relativposition auf der Leuchtelemente-Skala (28-32) darstellbar ist.

9. Klimatisierungssystem nach Anspruch 8,
**dadurch gekennzeichnet,**
**dass** die Leuchtelemente-Skala (28-32) als ein zu dem zugeordneten Drehknopf (22-26) konzentrischer Teilring ausgebildet ist.

10. Klimatisierungssystem nach einem der Ansprüche 6 bis 9,
**dadurch gekennzeichnet,**
**dass** das Bedienteil (18) einen Modenschalter (40) aufweist, durch dessen Betätigung in jedem Betriebsmodus die Umschaltung in den jeweils anderen Betriebsmodus einleitbar ist, wobei das Steuergerät (16) eingerichtet ist, bei Betätigung des Modenschalters (40) im Synchronmodus dem Bedienteil (18) die Kontrolle über das Primärklimagerät (12) zuzuweisen.

11. Klimatisierungssystem nach einem der Ansprüche 6 bis 10,
**dadurch gekennzeichnet,**
**dass** das Bedienteil (18) einen Geräteschalter (42) aufweist, durch dessen Betätigung im Separatmodus der Kontrollwechsel des Bedienteils über die Klimageräte (12, 14) einleitbar ist, wobei das Steuergerät (16) eingerichtet ist, bei Bedienung des Geräteschalters (42) im Synchronmodus dem Bedienteil (18) die Kontrolle über das Sekundärklimagerät (14) zuzuweisen.

## Claims

1. Method for controlling an air-conditioning system (10) for a motor vehicle, wherein the air-conditioning system (10) has
- a primary air-conditioning device (12) for air-conditioning a primary climatic zone in the interior of the motor vehicle,
- a secondary air-conditioning device (14) for air-conditioning a secondary climatic zone in the interior of the motor vehicle, and
- an operator control component (18) with parameter-setting elements (22-26, 36) for setting desired values of device parameters of the primary air-conditioning device (12) and having parameter display elements (28-32, 38) for displaying the set values,
wherein in a synchronous mode in which the operator control component (18) has control over both air-conditioning devices (12, 14), each value setting for a device parameter of the primary air-conditioning device (12) is also assigned to the corresponding device parameter of the secondary air-conditioning device (14),
and wherein the air-conditioning system (10) can be switched over to a separate mode in which the operator control component (18) has control over just one air-conditioning device (12; 14),
**characterized**
**in that** within the separate mode control over the primary air-conditioning device (12) or the secondary air-conditioning device (14) can be optionally assigned to the operator control component (18) and
**in that** where there is a changeover of control the device parameter values of the air-conditioning device (12; 14) which is controlled before the changeover of control remain unchanged and the device parameter values of the air-conditioning device (14; 12) which is controlled after the changeover of control are assigned to the current settings of parameter-setting elements (22-26, 36) and are displayed by the parameter display elements (28-32, 38).

2. Method according to Claim 1,
**characterized**
**in that** at least one of the parameter-setting elements (22-26) is embodied as a stop-free rotary knob whose rotational angle is representative of the degree of a change which is to be aimed at in the value of an assigned device parameter.

3. Method according to Claim 2,
**characterized**
**in that** a light element scale (28, 32) is assigned to the parameter-setting element (22-26) as a corresponding parameter display element on which light element scale (28, 32) the respectively currently set device parameter value is represented as a relative value within its possible value range by marking a corresponding relative on the light element scale (28-32).

4. Method according to one of the preceding claims,
**characterized**
**in that**, when a mode switch (40), which serves, in each operating mode, to initiate the switching over into the respective other operating mode is activated in the synchronous mode, the control over the primary air-conditioning device (12) is assigned to the operator control component (18).

5. Method according to one of the preceding claims,
**characterized**
**in that**, when a device switch (42), which serves for initiating the changeover of control in the separate mode, is activated in the synchronous mode, a mode switchover to the separate mode takes place, wherein the control over the secondary air-conditioning device (14) is assigned to the operator control component (18).

6. Air-conditioning system for a motor vehicle, comprising
- a primary air-conditioning device (12) for air-conditioning a primary climatic zone in the interior of the motor vehicle,
- a secondary air-conditioning device (14) for air-conditioning a secondary climatic zone in the interior of the motor vehicle,
- an operator control component (18) with parameter-setting elements (22-26, 36) for setting desired values of device parameters of the primary air-conditioning device (12) and having parameter display elements (28-32, 38) for displaying the set values, and
- a control unit which is connected in a data-exchanging fashion to the air-conditioning devices (12, 14) and the operator control component (12) by means of a bus system (20),
wherein in a synchronous mode in which the operator control component (16) has control over both air-conditioning devices (12, 14), corresponding device parameters of the primary air-conditioning device (12) and of the secondary air-conditioning device (14) can be set immediately and identically by actuating a parameter value-setting element (22-26, 36),
and wherein the air-conditioning system (10) can be switched over to a separate mode in which the operator control component (18) has control over just one air-conditioning device (12; 14),
**characterized**
**in that** the operator control component (18) has a device switch (42) by means of which control either over the primary air-conditioning device (12) or over the secondary air-conditioning device (14) can be assigned to the operator control component (18) within the separate mode, and
**in that**, in the event of a changeover of control, the control device (16) is configured to leave unchanged the device parameter values of the air-conditioning device (12; 14) which is controlled before the changeover of control, and to assign the device parameter values of the air-conditioning device (14; 12), controlled after the changeover of control, to the current settings of the parameter-setting elements (22-26, 36) and to cause them to be displayed by the parameter display elements (28-32, 38).

7. Air-conditioning system according to Claim 6,
**characterized**
**in that** at least one of the parameter-setting elements (22-26) is embodied as a stop-free rotary knob whose rotational angle is representative of the degree of a change which is to be aimed at in the value of an assigned device parameter.

8. Air-conditioning system according to Claim 7,
**characterized**
**in that** a light element scale (28-32) is assigned to the parameter-setting element (22-26) as a corresponding parameter display element, on which light element scale (28-32) a respectively currently set device parameter value can be represented as a relative value within its possible value range by marking a corresponding relative position on the light element scale (28-32).

9. Air-conditioning system according to Claim 8,
**characterized**
**in that** the light element scale (28-32) is embodied as a partial ring which is concentric with respect to the assigned rotary knob (22-26).

10. Air-conditioning system according to one of Claims 6 to 9,
**characterized**
**in that** the operator control component (18) has a mode switch (40), whose activation can initiate, in each operating mode, the switchover into the respective other operating mode, wherein the control device (16) is configured to assign control over the primary air-conditioning device (12) to the operator control component (18) when the mode switch (40) is activated in the synchronous mode.

11. Air-conditioning system according to one of Claims 6 to 10,
**characterized**
**in that** the operator control component (18) has a device switch (42) whose activation in the separate mode can initiate the changeover of control of the operator control component over the air-conditioning devices (12, 14), wherein the control device (16) is configured to assign control over the secondary air-conditioning device (14) to the operator control component (18) when the device switch (42) is operated in the synchronous mode.

## Revendications

1. Procédé de commande d'un système de climatisation (10) pour un véhicule automobile, le système de climatisation (10) comportant :
- un climatiseur principal (12) servant à climatiser une zone de climatisation principale à l'intérieur du véhicule automobile ;
- un climatiseur secondaire (14) servant à climatiser une zone de climatisation secondaire à l'intérieur du véhicule automobile ; et
- une partie de commande (18) dotée d'éléments de réglage de paramètres (22-26, 36) pour régler les valeurs souhaitées de certains paramètres d'appareil du climatiseur principal (12) et dotée d'éléments d'affichage de paramètres (28-32, 38) pour afficher les valeurs réglées ;
dans un mode synchrone dans lequel la partie de commande (18) a le contrôle sur les deux climatiseurs (12, 14), chaque réglage d'un paramètre d'appareil du climatiseur principal (12) étant également attribué au paramètre d'appareil correspondant du climatiseur secondaire (14) ; et
le système de climatisation (10) pouvant être basculé dans un mode séparé dans lequel la partie de commande (18) a le contrôle sur un seul climatiseur (12 ; 14) ;
**caractérisé en ce que** :
à l'intérieur du mode séparé, le contrôle sur le climatiseur principal (12) ou sur le climatiseur secondaire (14) peut être attribué au choix à la partie de commande (18) et qu'en cas de changement de contrôle, les valeurs de paramètre d'appareil du climatiseur (12 ; 14) contrôlé avant le changement de contrôle restent inchangées et que les valeurs de paramètre d'appareil du climatiseur (14 ; 12) contrôlé après le changement de contrôle sont associées aux positions actuelles des éléments de réglage de paramètres (22-26, 36) et sont affichées par les éléments d'affichage de paramètres (28-32, 38).

2. Procédé selon la revendication 1, **caractérisé en ce qu'**au moins un des éléments de réglage de paramètres (22-26) prend la forme d'un bouton tournant sans butée dont l'angle de rotation est représentatif de l'ampleur d'une variation de valeur à commander pour un paramètre d'appareil associé.

3. Procédé selon la revendication 2, **caractérisé en ce qu'**une échelle d'éléments d'éclairage (28, 32) est associée à l'élément de réglage de paramètres (22-26) sous la forme d'un élément d'affichage de paramètres correspondant, la valeur de paramètre d'appareil respectivement réglée actuellement étant représentée sur ladite échelle sous la forme d'une valeur relative à l'intérieur de sa plage de valeur possible, par marquage d'une position relative correspondante sur l'échelle d'éléments d'éclairage (28-32).

4. Procédé selon l'une quelconque des revendications précédentes, **caractérisé en ce qu'**en cas d'actionnement d'un commutateur de modes (40) servant dans chaque mode de fonctionnement à introduire le basculement dans le respectivement autre mode de fonctionnement, le contrôle sur le climatiseur principal (12) est attribué à la partie de commande (18) dans le mode synchrone.

5. Procédé selon l'une quelconque des revendications précédentes, **caractérisé en ce qu'**en cas d'actionnement d'un commutateur d'appareil (42) servant, dans le mode séparé, à introduire le changement de contrôle, un basculement de mode en mode séparé se produit dans le mode synchrone, le contrôle sur le climatiseur secondaire (14) étant attribué à la partie de commande (18).

6. Système de climatisation pour un véhicule automobile, comprenant :
- un climatiseur principal (12) servant à climatiser une zone de climatisation principale à l'intérieur du véhicule automobile ;
- un climatiseur secondaire (14) servant à climatiser une zone de climatisation secondaire à l'intérieur du véhicule automobile ;
- une partie de commande (18) dotée d'éléments de réglage de paramètres (22-26, 36) pour régler les valeurs souhaitées de certains paramètres d'appareil du climatiseur principal (12) et dotée d'éléments d'affichage de paramètres (28-32, 38) pour afficher les valeurs réglées ; et
- un appareil de commande relié aux climatiseurs (12, 14) et à la partie de commande (18) avec possibilité d'échanges de données à l'aide d'un système de bus (20) et les commandant ;
dans un mode synchrone dans lequel la partie de commande (16) a le contrôle sur les deux climatiseurs (12, 14) par actionnement d'un élément de réglage de valeurs de paramètre (22-26, 36), les paramètres d'appareil correspondants du climatiseur principal (12) et du climatiseur secondaire (14) pouvant être réglés simultanément et de façon identique ; et
le système de climatisation (10) pouvant être basculé dans un mode séparé dans lequel la partie de commande (18) a le contrôle sur un seul climatiseur (12 ; 14) ;
**caractérisé en ce que** :
la partie de commande (18) comporte un commutateur d'appareil (42) à l'aide duquel, à l'intérieur du mode séparé, le contrôle sur le climatiseur principal (12) ou le climatiseur secondaire (14) peut être attribué au choix à la partie de commande (18) ; et
l'appareil de commande (16) est conçu pour laisser inchangées, en cas de changement de contrôle, les valeurs de paramètre d'appareil du climatiseur (12 ; 14) contrôlé avant le changement de contrôle et pour associer les valeurs de paramètre d'appareil du climatiseur (14 ; 12) contrôlé après le changement de contrôle aux positions actuelles des éléments de réglage de paramètres (22-26, 36) et pour laisser les éléments d'affichage de paramètres (28-32, 38) l'afficher.

7. Système de climatisation selon la revendication 6, **caractérisé en ce qu'**au moins un des éléments de réglage de paramètres (22-26) prend la forme d'un bouton tournant sans butée dont l'angle de rotation est représentatif de l'ampleur d'une variation de valeur à commander d'un paramètre d'appareil associé.

8. Système de climatisation selon la revendication 7, **caractérisé en ce qu'**une échelle d'éléments d'éclairage (28-32) est associée à l'élément de réglage de paramètres (22-26) sous la forme d'un élément d'affichage de paramètres correspondant, la valeur de paramètre d'appareil respectivement actuellement réglée pouvant être représentée sur ladite échelle sous la forme d'une valeur relative à l'intérieur de sa plage de valeur possible, par marquage d'une position relative correspondante sur l'échelle d'éléments d'éclairage (28-32).

9. Système de climatisation selon la revendication 8, **caractérisé en ce que** l'échelle d'éléments d'éclairage (28-32) prend la forme d'une bague partielle concentrique par rapport au bouton tournant (22-26) associé.

10. Système de climatisation selon l'une quelconque des revendications 6 à 9, **caractérisé en ce que** la partie de commande (18) comporte un commutateur de modes (40) par le biais de l'actionnement duquel dans chaque mode de fonctionnement, le basculement dans le respectivement autre mode de fonctionnement peut être introduit, l'appareil de commande (16) étant conçu pour attribuer, en cas d'actionnement du commutateur de modes (40) dans le mode synchrone, le contrôle sur le climatiseur principal (12) à la partie de commande (18).

11. Système de climatisation selon l'une quelconque des revendications 6 à 10, **caractérisé en ce que** la partie de commande (18) comporte un commutateur d'appareil (42) par le biais de l'actionnement duquel dans le mode séparé, le changement de contrôle de la partie de commande peut être introduit visa les climatiseurs (12, 14), l'appareil de commande (16) étant conçu pour attribuer, en cas d'utilisation du commutateur d'appareil (42) dans le mode synchrone, le contrôle sur le climatiseur secondaire (14) à la partie de commande (18).
